# EUROPÄISCHE PATENTSCHRIFT

(11) **EP 3 413 020 B1**
(45) Veröffentlichungstag und Bekanntmachung des Hinweises auf die Patenterteilung: **01.07.2020**
(21) Anmeldenummer: 18185080.1
(22) Anmeldetag: 16.11.2006
(51) Int. Cl.: G01F 23/284, H01Q 1/22, H01Q 13/02, H01Q 19/06

(54) **METALLISIERTER KUNSTSTOFFANTENNENENTRICHTER FÜR EIN FÜLLSTANDRADAR**
METALLISED PLASTIC ANTENNA FUNNEL FOR A FILL LEVEL RADAR
PAVILLON D'ANTENNE EN MATIÈRE PLASTIQUE MÉTALLISÉ POUR UN RADAR DE NIVEAU DE REMPLISSAGE

(30) Priorität: 24.11.2005 DE 102005056042; 28.11.2005 US 74022805 P
(43) Veröffentlichungstag der Anmeldung: 12.12.2018
(62) Teilanmeldung aus: 06818596.6
(73) Patentinhaber: VEGA Grieshaber KG, 77709 Wolfach (DE)
(72) Erfinder: MOTZER, Jürgen, 77723 Gengenbach (DE); KIENZLE, Klaus, 77736 Zell am Harmersbach (DE); FEHRENBACH, Josef, 77716 Haslach (DE); SUM, Christian, 77709 Wolfach (DE)
(74) Vertreter: Maiwald Patent- und Rechtsanwaltsgesellschaft mbH

(56) Entgegenhaltungen:
- EP-A1- 1 076 380
- WO-A-02/41446
- WO-A-90/13927
- DE-A1- 3 601 040
- DE-A1- 10 354 754
- DE-C2- 19 703 346
- DE-U1-202005 008 528
- US-A1- 2003 151 560

## Beschreibung

### Technisches Gebiet

Die vorliegende Erfindung betrifft eine Kunststoffantenne für ein Füllstandradar, ein Füllstandradar zur Bestimmung eines Füllstands in einem Tank, und die Verwendung einer Kunststoffantenne zur Füllstandmessung.

### Hintergrund der Erfindung

Bekannte Füllstandmessgeräte weisen Parabol- oder Hornantennen auf, welche Radar- oder Mikrowellen aussenden bzw. empfangen, um den Füllstand eines Mediums in einem Füllgutbehälter zu ermitteln. Die Antenne eines solchen Füllstandmessgeräts ist dabei beispielsweise innerhalb eines Behälters oder aber auch (z.B. zur Wasserstandsbestimmung) unter einer Brücke angeordnet.

Derartige Antennen werden heutzutage in Form von Blechantennen gefertigt, welche tiefgezogen und entsprechend geschweißt werden. Weiterhin werden auch massive Materialien aus Edelstahl verwendet, aus denen die entsprechenden Antennen herausgedreht werden. Ein solcher Fertigungsprozess ist mechanisch anspruchsvoll und erfordert erhöhten Aufwand. Weiterhin führt die metallische Ausführung der Antennen zu einem erheblichen Gewicht, welches sich insbesondere bei stark schwankenden Umgebungsbedingungen (wie beispielsweise starker Winddruck oder starke Beschleunigungen) sehr negativ auswirken kann und teilweise zu Ausfällen des Systems aufgrund mechanischer Beanspruchung führen kann.

WO 02/41446 A beschreibt eine Hornantenne aus Metall, die von einem Dielektrikum vollständig umschlossen bzw. hierin eingebettet ist.

US 2003/151560 A1 beschreibt ein Antennensystem für ein Füllstandmessgerät zum Aussenden von Mikrowellensignalen mittels eines Antennenhorns und mittels planarer Strukturen mit einem Patch oder mehreren Patches.

### Darstellung der Erfindung

Es ist eine Aufgabe der vorliegenden Erfindung, eine verbesserte Antenne für ein Füllstandradar anzugeben.

Gemäß der vorliegenden Erfindung ist eine metallisierte Kunststoffantenne für ein Füllstandradar angegeben, die metallisierte Kunststoffantenne umfassend einen Antennenkörper aus einem Kunststoff mit einer Innenseite, wobei die Innenseite des Antennenkörpers eine Metallisierung zum Leiten von elektromagnetischen Wellen aufweist.

Eine solche Kunststoffantenne ist vergleichsweise billig in der Herstellung und weist ein geringes Gewicht auf. Durch die innenseitige Metallisierung des Antennenkörpers können elektromagnetische Wellen, wie beispielsweise Mikrowellen oder Radarwellen, entsprechend ausgesendet oder empfangen werden. Weiterhin kann die Metallisierung die chemische Beständigkeit des Kunststoffantennenkörpers erhöhen, indem sie den gesamten Antennenkörper in Form eines Schutzüberzuges umgibt.

Gemäß der vorliegenden Erfindung bildet die Innenseite des Antennenkörpers einen Hohlraum aus, wobei der Hohlraum eine Öffnung aufweist und zumindest teilweise mit einer Füllung ausgefüllt ist, welche die Öffnung des Hohlraums verschließt.

Die Füllung des Hohlraums kann zur Stabilisierung der Antenne dienen und die mechanische Festigkeit der Antenne erhöhen. Weiterhin kann das Eindringen von Kondensat oder anderen Verunreinigungen in den Hohlraum verhindert werden. Damit kann erreicht werden, dass die Antenne nunmehr auch in Umgebungsbedingungen einsetzbar ist, für die bisher andere Antennenarten notwendig waren (wie beispielsweise Edelstahlantennen). Weiterhin kann durch die Füllung die Druckresistenz gegen starke äußere Druckschwankungen erhöht werden.

Für die Füllung können verschiedenste Materialien eingesetzt werden. Beispielsweise kann ein Schaum verwendet werden, wie z. B. ROHACELL, oder es kann ein Dielektrikum verwendet werden, dessen Dielektrizitätskonstante (εᵣ) nahe dem Wert für Luft liegt. Hierdurch können Impedanzverluste verringert werden.

Weiterhin können als Füllmaterial Polytetrafluoroethylen (PTFE) oder ein anderes Thermoplast oder ein glasfaserverstärkter Kunststoff, wie beispielsweise Polyphenylsulfid (PPS) oder Polypropylen (PP) vorgesehen sein. Derartige glasfaserverstärkte Kunststoffe können auch in Kombination mit anderen geeigneten Werkstoffen eingesetzt werden.

Gemäß einem Ausführungsbeispiel der vorliegenden Erfindung weisen die elektromagnetischen Wellen eine Frequenz zwischen 50 GHz und 100 GHz auf. Insbesondere kann die metallisierte Kunststoffantenne gemäß einem weiteren Ausführungsbeispiel der vorliegenden Erfindung elektromagnetische Wellen mit einer Frequenz zwischen 57 GHz und 64 GHz oder zwischen 75 GHz und 85 GHz emittieren und detektieren.

Selbstverständlich kann die Antenne auch derart dimensioniert werden, dass sie elektromagnetische Wellen höherer Frequenzen als 100 GHz oder elektromagnetische Wellen mit niedriger Frequenz, beispielsweise einer Frequenz zwischen 5 GHz und 30 GHz, senden bzw. empfangen kann.

Gemäß der vorliegenden Erfindung ist die Kunststoffantenne als Hornantenne oder als Parabolantenne ausgebildet.

Im Falle einer Parabolantenne ist die Innenseite des Antennenkörpers, welche die Metallisierung aufweist, die aktive Seite des Antennenkörpers (also die Seite, welche in Richtung Füllgut gerichtet ist und der Abstrahlung bzw. Detektion der elektromagnetischen Wellen dient).

Gemäß einem weiteren Ausführungsbeispiel der vorliegenden Erfindung umfasst der Antennenkörper glasfaserverstärkten Kunststoff. Hierbei kann es sich beispielsweise um Polybutylentheraphtalat (PBT) mit einem Glasfaseranteil von etwa 30 % handeln. Dieser Glasfaseranteil wird aus Stabilitätsgründen beigefügt. Natürlich kann der Glasfaseranteil auch einen anderen Prozentsatz annehmen. Z. B. kann er, je nach Erfordernis, zwischen 20 und 30 % liegen oder zwischen 30 oder 40 %. Auch andere Glasfaseranteile sind möglich und gewünscht, um eine z.B. mechanische Verstärkung zu erzielen.

Gemäß einem weiteren Ausführungsbeispiel der vorliegenden Erfindung ist die Metallisierung der Innenseite des Antennenkörpers als Lackbeschichtung ausgeführt, die mit leitenden Elementen angereichert ist.

Gemäß einem Ausführungsbeispiel der vorliegenden Erfindung umfasst die Lackbeschichtung metallgefüllte Leitlacke, zum Beispiel Kupfer-Silber-Leitlack.

Gemäß einem weiteren Ausführungsbeispiel der vorliegenden Erfindung ist die Metallisierung der Innenseite des Antennenkörpers als Hochvakuum-Bedampfungsschicht ausgeführt. Natürlich kann die Metallisierung auch unter Normaldruck stattfinden oder im normalen Vakuum. Eine Hochvakuum-Bedampfung kann allerdings zu einer erhöhten Reinheit der Metallisierung führen.

Gemäß einem weiteren Ausführungsbeispiel der vorliegenden Erfindung ist die Metallisierung der Innenseite des Antennenkörpers als chemische Galvanisierungsschicht ausgeführt.

Beispielsweise kann als Beschichtungsmaterial Edelstahl verwendet werden, es sind aber auch andere Materialien möglich, wie beispielsweise Aluminium-, Kupfer-, Nickel-, Zinn-, Chrom-Mischungen oder Legierungen. Auch kann eine Metallisierung mit Edelmetallen erfolgen, wie beispielsweise Gold oder Platin.

Gemäß der vorliegenden Erfindung umfasst die metallisierte Kunststoffantenne weiterhin eine Abkapselung zum Verschließen der Öffnung des Hohlraums, wobei die Abkapselung zum chemischen Schutz der Innenseite des Antennenkörpers vor äußeren Einflüssen ausgeführt ist.

Hierdurch kann eine Resistenz der Innenseite der Antenne gegen aggressive Stoffe gewährleistet werden. Die Abkapselung kann hierbei einerseits dem Schutz vor Verunreinigungen, chemischen Substanzen oder aber auch Temperaturschwankungen und dergleichen dienen. Andererseits kann, gemäß der vorliegenden Erfindung, die Abkapselung als Linse zur Fokussierung der elektromagnetischen Wellen ausgeführt sein.

Die Linse kann hierbei beispielsweise asphärisch ausgeführt sein. Weiterhin kann die Linse sphärisch, konvex oder konkav ausgeführt sein, je nach Anforderung.

Gemäß einem weiteren Ausführungsbeispiel der vorliegenden Erfindung umfasst die metallisierte Kunststoffantenne weiterhin einen Hals mit einem Anschlussbereich, wobei der Anschlussbereich des Halses einen ersten Winkel zur Längsachse des Halses derart aufweist, dass der Anschlussbereich an einen Wellenleiter dichtend anlegbar ist.

Beispielsweise weist hierfür der Wellenleiter einen zweiten Winkel zur Längsachse des Halses auf (wenn die Antenne mit dem Wellenleiter verbunden ist). Der Winkel des Wellenleiters ist hierbei kleiner als der entsprechende Winkel des Antennenhalses. Hierdurch ergibt sich einerseits eine geringe Berührungsfläche zwischen Wellenleiter und Antennenhals. Andererseits wird durch die Winkelung eine Justage von dem Antennenhals relativ zum Hohlleiter erleichtert. Durch die geringe Berührungsfläche aufgrund der unterschiedlichen Winkelung wird eine Abdichtung zwischen Hohlleiter und Antenne erleichtert, da sich eine Anpresskraft bei der Montage auf eine relativ kleine Fläche verteilt, so dass der Hohlleiter beispielsweise leicht in das Antennenmaterial hineingepresst werden kann.

Gemäß einem weiteren Ausführungsbeispiel der vorliegenden Erfindung weist der Anschlussbereich der Kunststoffantenne eine Rotationssymmetrie bezüglich der Längsachse des Halses auf.

Beispielsweise ist der Anschlussbereich konisch ausgebildet. Entsprechend kann dann der Anschlussbereich des Wellenleiters ebenso konisch ausgebildet sein, aber mit einem spitzeren (kleineren) Winkel.

Gemäß der vorliegenden Erfindung ist ein Füllstandradar zur Bestimmung eines Füllstands in einem Tank angegeben, wobei das Füllstandradar eine oben beschriebene Kunststoffantenne zum Aussenden und/oder Empfangen von elektromagnetischen Wellen umfasst.

Das Füllstandradar kann beispielsweise einen Wellenleiter zum Speisen der Antenne mit den elektromagnetischen Wellen umfassen, wobei der Wellenleiter einen Bereich zum Anschluss des Wellenleiters an den Anschlussbereich der Kunststoffantenne aufweist, wobei der Bereich des Wellenleiters im angeschlossenen Zustand einen Winkel zur Längsachse des Halses der Kunststoffantenne aufweist, welcher kleiner ist als der entsprechende Winkel des Anschlussbereichs der Kunststoffantenne. Weiterhin ist, gemäß diesem Ausführungsbeispiel der vorliegenden Erfindung, der Anschlussbereich der Kunststoffantenne an den Bereich des Wellenleiters dichtend anlegbar.

Weiterhin ist die Verwendung einer erfindungsgemäßen Kunststoffantenne zur Füllstandmessung angegeben.

Weiterhin ist ein Verfahren zum Fertigen einer entsprechenden Kunststoffantenne angegeben, umfassend ein Bereitstellen eines Antennenkörpers aus einem Kunststoff mit einer Innenseite und ein Metallisieren der Innenseite des Antennenkörpers zum Leiten von elektromagnetischen Wellen.

Hierdurch wird ein Verfahren bereitgestellt, durch welches Produktionskosten und Gewicht der Füllstandradarantenne reduziert werden können.

Gemäß einem weiteren Ausführungsbeispiel der vorliegenden Erfindung wird vor der Metallisierung eine Plasma-Aktivierung der Innenseite vorgenommen, wobei das Metallisieren einen Schritt aufweist, der ausgewählt ist aus der Gruppe bestehend aus Lackbeschichtung, Hochvakuum-Bedampfung und chemische Galvanisierung.

Die Erfindung wird definiert durch die unabhängigen Ansprüche 1, 16 und 18. Weitere Ausführungsbeispiele, Aufgaben und Vorteile der Erfindung ergeben sich aus den Unteransprüchen.

### Kurze Beschreibung der Zeichnungen

Im Folgenden werden mit Verweis auf die Figuren bevorzugte Ausführungsbeispiele der vorliegenden Erfindung beschrieben.
Fig. 1 zeigt eine schematische Querschnittsdarstellung eines Füllstandradars gemäß einem Ausführungsbeispiel der vorliegenden Erfindung.
Fig. 2 zeigt eine schematische Darstellung des Füllstandradars der Fig. 1 in Draufsicht.
Fig. 3 zeigt eine schematische Querschnittsdarstellung eines Füllstandradars, angebracht an einem Behälter, gemäß einem weiteren Ausführungsbeispiel der vorliegenden Erfindung.
Fig. 4 zeigt eine schematische Querschnittsdarstellung einer Kunststoffantenne, angeschlossen an einen Hohlleiter, gemäß einem weiteren Ausführungsbeispiel der vorliegenden Erfindung.
Fig. 5 zeigt eine Verbindung zwischen Linse und dem Antennenkörper gemäß einem weiteren Ausführungsbeispiel der vorliegenden Erfindung.

Die Darstellungen in den Figuren sind schematisch und nicht maßstäblich.

### Detaillierte Beschreibung von exemplarischen Ausführungsformen

In der folgenden Figurenbeschreibung werden für die gleichen oder ähnlichen Elemente die gleichen Bezugsziffern verwendet.

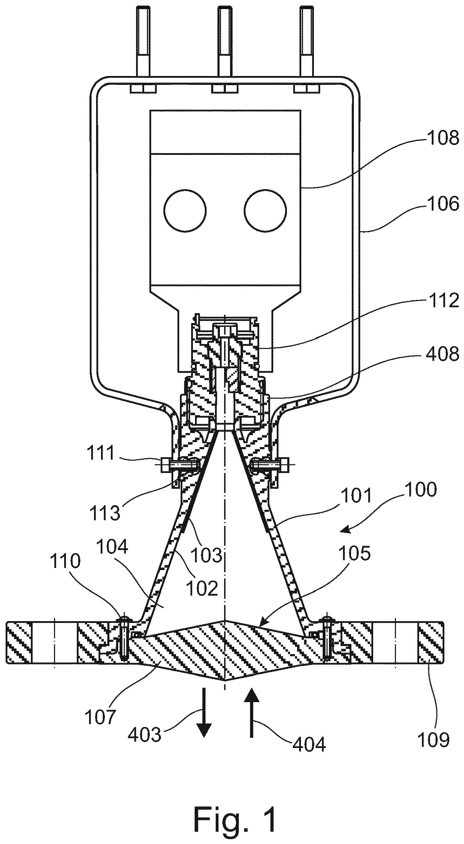

Fig. 1 zeigt eine schematische Querschnittsdarstellung eines Füllstandradars gemäß einem Ausführungsbeispiel der vorliegenden Erfindung. Wie in Fig. 1 zu erkennen, weist das Füllstandradar im Wesentlichen eine metallisierte Kunststoffantenne 100 und ein Gehäuse 108 auf, welches ein Elektronikmodul im Innern des Gehäuses 108 birgt. Weiterhin ist ein Haltebügel 106 vorgesehen.

Die Kunststoffantenne 100 dient hierbei zum Aussenden und Empfangen elektromagnetischer Wellen 403, 404. Die auszusendenden Wellen 403 werden hierbei innerhalb der Elektronik erzeugt und dann über einen Adapter oder Anschlussstück 112, welcher einen Hohlleiter umfasst, in die Antenne 100 eingespeist. Umgekehrt werden die einfallenden Wellen 404 von der Antenne 100 detektiert und über das Anschlussstück 112 mit Hohlleiter an die Elektronik übertragen, wo sie dann entsprechend ausgewertet werden können.

Die Kunststoffantenne 100 umfasst einen Antennenkörper 101 mit einer Innenseite 102. Der Antennenkörper 101 weist einen Hals 408 auf, welcher zum Anschluss eines Standardgeräts, beispielsweise aus der VEGA-Gehäuseserie, ausgeführt ist.

Um den Haltebügel 106 an der Antenne 100 anzubringen, sind Öffnungen 113 im Antennenkörper vorgesehen, in welche Hülsen oder Gewindebuchsen eingeschoben werden können, um ein entsprechendes Befestigungselement 111 (beispielsweise eine Schraube) aufzunehmen. Zudem können die Gewindebuchsen auch eingespritzt werden.

Die Innenseite 102 des Antennenkörpers 101 weist eine Metallisierung 103 auf, welche beispielsweise in Form einer Leitlackbeschichtung, einer chemischen Galvanisierung oder einer Metallbedampfung aufgebracht ist. Die Beschichtung 103 kann hierbei den gesamten Hohlraum 104 der Kunststoffantenne 100 ausfüllen oder aber auch nur Teilbereiche (wie in Fig. 1 dargestellt).

Natürlich kann die Metallisierung sich auch in den Außenbereich der Antenne 100 erstrecken, um beispielsweise eine komplette (innere und äußere) Versiegelung der Kunststoffantenne bereitzustellen.

Der Hohlraum 104 der Antenne 100 ist durch eine entsprechende Abdeckung, wie zum Beispiel eine Scheibe oder Linse 107, nach außen hin abgeschlossen oder abgekapselt. Ein Flansch ist somit nicht erforderlich.

Die Linse 107 dient einerseits dem Schutz der Antenneninnenseite, andererseits der Bereitstellung eines Linseneffekts zur Fokussierung oder Bündelung der elektromagnetischen Wellen. Hierdurch kann eine kürzere Bauform des Trichters bei gleichem Antennengewinn erreicht werden.

Die Linse besteht beispielsweise aus einem Kunststoff, wie PTFE, Polypropylen, oder aus Glas oder einer Keramik.

Die Linse 107 bewirkt einen optimalen Abstrahlwinkel der elektromagnetischen Wellen 403, dient also der Bündelung, und kann konvex, konkav, sphärisch, asphärisch oder kegelförmig ausgeführt sein. Insgesamt kann somit u. a. eine Verkürzung des Antennensystems bei ansonsten gleichen Bedingungen erreicht werden.

Um die Öffnung 105 der Antenne 100 sicher abzudichten, können Befestigungsmittel 110 vorgesehen sein, welche die Linse 107 mit dem Antennenkörper 101 verbinden. Die Befestigung kann auch mit einem Gewinde an der Außenseite der Linse erfolgen.

Weiterhin kann ein Flansch 109 vorgesehen sein, um das Füllstandradar an einem entsprechenden Behälter anzubringen.

Ein derartiges Füllstandradar ist beispielsweise auch bei schwierigen, aggressiven Umgebungsbedingungen einsetzbar, z. B. in Bereichen der chemischen Industrie, da die Dichtigkeit durch die Abdeckung 107 gegeben ist. Ein Extraflansch zur Abdichtung ist hier nicht erforderlich.

Zur Befestigung des Füllstandradars an einen Behälter kann der Haltebügel 106 am Hals 408 vorgesehen sein.

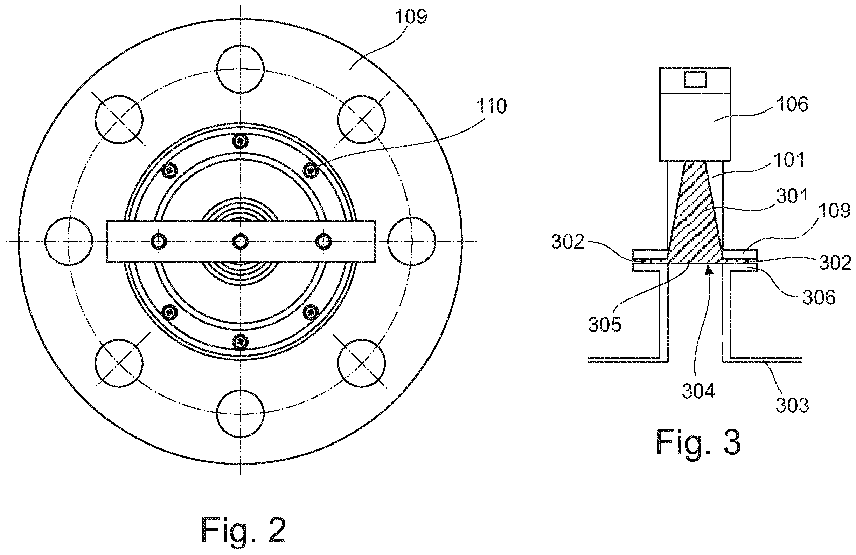

Fig. 2 zeigt eine schematische Darstellung des Füllstandradars der Fig. 1 in einer Draufsicht. Insbesondere sind hier beispielhaft die Positionen der Befestigungsmittel 110 angegeben. Natürlich können die Bohrungen auch an anderer Stelle angebracht sein.

Fig. 3 zeigt eine schematische Querschnittsdarstellung eines Füllstandradars gemäß einem Ausführungsbeispiel der vorliegenden Erfindung, der an einem Behälter 303 befestigt ist. Die Kunststoffantenne 101 ist hier mit einem dielektrischen Medium 301 befüllt, welches der Stabilisierung und der Abdichtung des Antennensystems dient.

Der Füllstandradar ist über seinen Flansch 109 an den Behälter angeflanscht. Hierfür ist behälterseitig der Befestigungsflansch 306 vorgesehen. Das Dielektrikum 301 wird zwischen den beiden Flanschen 109, 306 eingequetscht, so dass sich eine dichtende Verbindung ergibt, wenn die beiden Flansche gegeneinander gedrückt werden. Die Dichtigkeit wird hierbei durch die Dichtung 302 unterstützt.

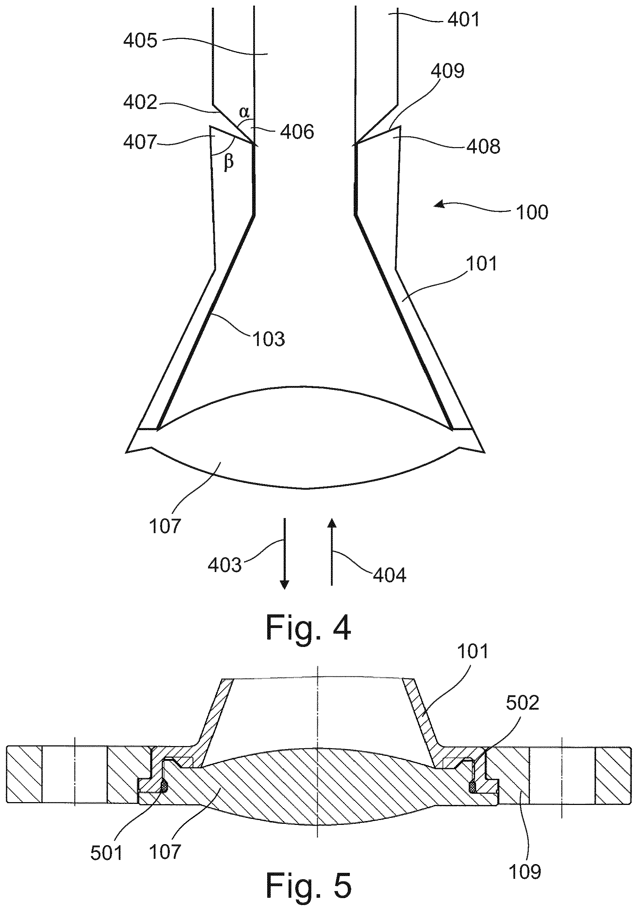

Die Verbindung zwischen Linse 107 und dem Antennenkörper 101 kann über eine Verschraubung, eine Klebung, Ultraschallschweißen, Halselementschweißen oder andere Kunststoffverarbeitungstechniken erfolgen. Auch andere Verbindung gemäß Fig. 5 sind möglich.

Fig. 4 zeigt eine schematische Querschnittsdarstellung einer metallisierten Kunststoffantenne gemäß einem Ausführungsbeispiel der vorliegenden Erfindung, welche an einen Hohlleiter 401 angeschlossen ist. Die Kunststoffantenne 100 weist hierfür einen Hals 408 auf, der einen Anschlussbereich 409 mit einer entsprechenden konischen Form aufweist. Der Wellenleiter 401 weist einen Bereich 402 auf, der zum Anschluss des Wellenleiters 401 an den Anschlussbereich 409 der Kunststoffantenne 100 ausgeführt ist. Die Zuleitung 401 ist beispielsweise aus Metall und wird an den Antennenhals 408 angeschraubt oder angeklebt. Antennenhals 408 und Hohlleiterende 402 weisen verschiedene unterschiedliche konische Winkel 407, 406 auf. Somit kann die Dichtigkeit zwischen Hohlleiter 401 und Antenne 100 erhöht werden, so dass kein Stofftransport zwischen der Umgebung und dem Inneren des Hohlleiters 405 an der Anschlussstelle auftreten kann. Durch einen entsprechenden Anpressdruck bei der Montage des Hohlleiters 401 an der Antenne 100 und einer evtl. Verklebung kann der Spalt zwischen Hohlleiter 401 und Antennenhals 408 minimiert werden, so dass die Radarwellen ohne Verluste transportiert werden können.

Natürlich sind auch andere Verbindungen zwischen Hohlleiter 401 und Antennenhals 408 möglich, wie beispielsweise entsprechende Verzahnungen, so dass die beiden Teile ineinander eingreifen können. Auch plane Auflagen sind möglich.

Fig. 5 zeigt eine Verbindung zwischen der Linse 107 und dem Antennenkörper 101 gemäß einem weiteren Ausführungsbeispiel der vorliegenden Erfindung. Die Befestigung der Linse 107 an dem Antennenkörper 101 erfolgt beispielsweise mit einem Gewinde an der Außenseite 502 der Linse. Somit sind keine Schrauben oder Verklebungen nötig. Weiterhin ist ein Dichtring 501 vorgesehen.

## Patentansprüche

1. Kunststoffantenne (100), ausgebildet als Hornantenne oder als Parabolantenne, für ein Füllstandradar, die Kunststoffantenne (100) umfassend:
einen Antennenkörper (101) aus einem Kunststoff mit einer Innenseite (102), die einen Hohlraum (104) ausbildet, der eine Öffnung (105) aufweist;
wobei auf die Innenseite (102) oder einen Teilbereich der Innenseite des Antennenkörpers (101) zum Leiten von elektromagnetischen Wellen eine metallische Beschichtung (103) aufgebracht ist;
eine Abkapselung (107) in Form einer Linse oder eine Füllung (301) zum Verschließen der Öffnung des Hohlraums;
wobei die Linse (107) mit der Kunststoffantenne (100) über eine Verschraubung, eine Klebung, Ultraschallschweissen oder Halselementschweissen verbunden ist;
wobei die Abkapselung oder die Füllung zum chemischen Schutz der Innenseite des Antennenkörpers vor äußeren Einflüssen ausgeführt ist.

2. Kunststoffantenne (100) nach Anspruch 1,
wobei die Füllung (301) ein dielektrisches Material aufweist.

3. Kunststoffantenne (100) nach einem der vorhergehenden Ansprüche,
wobei die Kunststoffantenne eingerichtet ist, die elektromagnetischen Wellen mit einer Frequenz zwischen 50 Gigahertz und 100 Gigahertz zu senden und empfangen.

4. Kunststoffantenne (100) nach einem der vorhergehenden Ansprüche, wobei die Kunststoffantenne eingerichtet ist, die elektromagnetischen Wellen mit einer Frequenz zwischen 75 Gigahertz und 85 Gigahertz zu senden und empfangen.

5. Kunststoffantenne (100) nach einem der vorhergehenden Ansprüche, wobei die Kunststoffantenne eingerichtet ist, die elektromagnetischen Wellen mit einer Frequenz zwischen 5 Gigahertz und 30 Gigahertz zu senden und empfangen.

6. Kunststoffantenne (100) nach einem der vorhergehenden Ansprüche, wobei der Antennenkörper (101) glasfaserverstärkten Kunststoff umfasst.

7. Kunststoffantenne (100) nach einem der vorhergehenden Ansprüche, wobei der Antennenkörper (101) Polybutylentheraphtalat und Glasfaser umfasst.

8. Kunststoffantenne (100) nach Anspruch 6 oder 7,
wobei der Glasfaseranteil an dem Antennenkörper (101) zwischen 25 % und 35 % beträgt.

9. Kunststoffantenne (100) nach einem der vorhergehenden Ansprüche, wobei die metallische Beschichtung der Innenseite (102) des Antennenkörpers (101) als Lackbeschichtung ausgeführt ist, die mit leitenden Elementen angereichert ist.

10. Kunststoffantenne (100) nach Anspruch 9,
wobei die Lackbeschichtung einen metallgefüllten Leitlack umfasst.

11. Kunststoffantenne (100) nach einem der vorhergehenden Ansprüche,
wobei die metallische Beschichtung der Innenseite (102) des Antennenkörpers (101) als Hochvakuum-Bedampfungsschicht ausgeführt ist.

12. Kunststoffantenne (100) nach einem der vorhergehenden Ansprüche,
wobei die metallische Beschichtung der Innenseite (102) des Antennenkörpers (101) als chemische Galvanisierungsschicht ausgeführt ist.

13. Kunststoffantenne (100) nach einem der vorhergehenden Ansprüche,
wobei die Abkapselung (107) als Linse zur Fokussierung der elektromagnetischen Wellen ausgeführt ist.

14. Kunststoffantenne (100) nach einem der vorhergehenden Ansprüche, weiterhin umfassend:
einen Hals (408) mit einem Anschlussbereich (409);
wobei der Anschlussbereich (409) des Halses (408) einen ersten konischen Winkel (407) zur Längsachse des Halses (408) aufweist und der Anschlussbereich (409) an einen Bereich (402) des Wellenleiters (401) dichtend angeschraubt oder angeklebt ist.

15. Kunststoffantenne (100) nach Anspruch 14,
wobei der Anschlussbereich (409) der Kunststoffantenne (100) eine Rotationssymmetrie bezüglich der Längsachse des Halses (408) aufweist.

16. Füllstandradar zur Bestimmung eines Füllstands in einem Tank, das Füllstandradar umfassend:
eine Kunststoffantenne (100) nach einem der Ansprüche 1 bis 15 zum Aussenden und / oder Empfangen von elektromagnetischen Wellen (403; 404).

17. Füllstandradar nach Anspruch 16, weiterhin umfassend:
einen Wellenleiter (401) zum Speisen der Antenne (100) mit den elektromagnetischen Wellen (403; 404);
- wobei der Wellenleiter (401) einen Bereich (402) zum Anschluss des Wellenleiters (401) an den Anschlussbereich (409) der Kunststoffantenne (100) aufweist;
- wobei der Bereich (402) des Wellenleiters (401) im angeschlossenen Zustand einen zweiten konischen Winkel (406) zur Längsachse des Halses (408) der Kunststoffantenne (100) aufweist;
- wobei der Anschlussbereich (409) der Kunststoffantenne (100) einen ersten konischen Winkel (407) zur Längsachse des Halses (408) der Kunststoffantenne (100) aufweist, der größer ist als der zweite Winkel (406); und
- wobei der Anschlussbereich (409) der Kunststoffantenne (100) an den Bereich (402) des Wellenleiters (401) dichtend angeschraubt oder angeklebt ist.

18. Verwendung einer Kunststoffantenne (100) nach einem der Ansprüche 1 bis 15 zur Füllstandmessung.

## Claims

1. Plastic antenna (100), designed as horn antenna or as parabolic antenna, for a fill level radar, comprising the plastic antenna (100):
an antenna body (101) made of a plastic material with an interior that (102) forms a cavity (104), which comprises an opening (105);
wherein a metallic coating (103) is applied to the interior (102) or a partial region of the interior of the antenna body (101) for conducting electromagnetic waves;
an encapsulation (107) in form of a lens or a filling (301) for closing the opening of the cavity;
wherein the lens (107) is connected to the plastic antenna (100) by means of a screw connection, an adhesive, ultrasonic welding or neck element welding;
wherein the encapsulation or the filling is designed to chemically protect the interior of the antenna body from external influences.

2. Plastic antenna (100) according to claim 1,
wherein the filling (301) comprises a dielectric material.

3. Plastic antenna (100) according to one of the preceding claims,
wherein the plastic antenna is configured to transmit and receive the electromagnetic waves at a frequency between 50 gigahertz and 100 gigahertz.

4. Plastic antenna (100) according to one of the preceding claims,
wherein the plastic antenna is configured to transmit and receive the electromagnetic waves at a frequency between 75 gigahertz and 85 gigahertz.

5. Plastic antenna (100) according to one of the preceding claims,
wherein the plastic antenna is configured to transmit and receive the electromagnetic waves at a frequency between 5 gigahertz and 30 gigahertz.

6. Plastic antenna (100) according to one of the preceding claims,
wherein the antenna body (101) comprises glass fiber reinforced plastic.

7. Plastic antenna (100) according to one of the preceding claims,
wherein the antenna body (101) comprises polybutylene terephthalate and glass fiber.

8. Plastic antenna (100) according to claim 6 or 7,
wherein the glass fiber content of the antenna body (101) is between 25 % and 35 %.

9. Plastic antenna (100) according to one of the preceding claims,
wherein the metallic coating of the interior (102) of the antenna body (101) is designed as a lacquer coating which is enriched with conductive elements.

10. Plastic antenna (100) according to claim 9,
wherein the lacquer coating comprises a metal-filled conductive lacquer.

11. Plastic antenna (100) according to one of the preceding claims,
wherein the metallic coating of the interior (102) of the antenna body (101) is designed as a high-vacuum vapor deposition layer.

12. Plastic antenna (100) according to one of the preceding claims,
wherein the metallic coating of the interior (102) of the antenna body (101) is designed as a chemical electroplating layer.

13. Plastic antenna (100) according to one of the preceding claims,
wherein the encapsulation (107) is designed as a lens for focusing the electromagnetic waves.

14. Plastic antenna (100) according to one of the foregoing claims, further comprising:
a neck (408) with a connection region (409);
wherein the connection region (409) of the neck (408) comprises a first conical angle (407) to the longitudinal axis of the neck (408) and the connection region (409) is screwed or glued to a region (402) of the waveguide (401) in a sealing manner.

15. Plastic antenna (100) according to claim 14,
wherein the connection region (409) of the plastic antenna (100) comprises a rotational symmetry with respect to the longitudinal axis of the neck (408).

16. Fill level radar for determining a fill level in a tank, the fill level radar comprises:
a plastic antenna (100) according to one of claims 1 to 15 for transmitting and/or receiving electromagnetic waves (403; 404).

17. Fill level radar according to claim 16, further comprising:
a waveguide (401) for feeding the antenna (100) with the electromagnetic waves (403; 404);
- wherein the waveguide (401) comprises a region (402) for connecting the waveguide (401) to the connection region (409) of the plastic antenna (100);
- wherein the region (402) of the waveguide (401) in the connected state comprises a second conical angle (406) to the longitudinal axis of the neck (408) of the plastic antenna (100);
- wherein the connection region (409) of the plastic antenna (100) comprises a first conical angle (407) to the longitudinal axis of the neck (408) of the plastic antenna (100) which is larger than the second angle (406); and
- wherein the connection region (409) of the plastic antenna (100) is screwed or glued to the region (402) of the waveguide (401) in a sealing manner.

18. Use of a plastic antenna (100) according to one of claims 1 to 15 for fill level measurement.

## Revendications

1. Antenne en matière plastique (100), réalisée sous la forme d'une antenne cornet ou d'une antenne parabolique, pour un radar de niveau de remplissage, l'antenne en matière plastique (100) comprenant :
un corps d'antenne (101) en matière plastique avec une face intérieure (102) formant une cavité (104) qui présente une ouverture (105) ;
dans laquelle un revêtement métallique (103) est appliqué sur la face intérieure (102) ou une partie de la face intérieure du corps d'antenne (101) pour conduire les ondes électromagnétiques ;
un cloisonnement (107) sous la forme d'une lentille ou d'un remplissage (301) pour fermer l'ouverture de la cavité ;
dans laquelle la lentille (107) est reliée à l'antenne en matière plastique (100) au moyen d'un raccord à vis, d'un collage, d'un soudage par ultrasons ou d'un soudage par éléments chauffants ;
dans laquelle le cloisonnement ou le remplissage est conçu pour la protection chimique de la face intérieure du corps d'antenne contre les influences extérieures.

2. Antenne en matière plastique (100) selon la revendication 1, dans laquelle le remplissage (301) présente un matériau diélectrique.

3. Antenne en matière plastique (100) selon l'une des revendications précédentes,
dans laquelle l'antenne en matière plastique est conçue pour émettre et recevoir des ondes électromagnétiques à une fréquence comprise entre 50 gigahertz et 100 gigahertz.

4. Antenne en matière plastique (100) selon l'une des revendications précédentes,
dans laquelle l'antenne en matière plastique est conçue pour émettre et recevoir des ondes électromagnétiques à une fréquence comprise entre 75 gigahertz et 85 gigahertz.

5. Antenne en matière plastique (100) selon l'une des revendications précédentes,
dans laquelle l'antenne en matière plastique est conçue pour émettre et recevoir des ondes électromagnétiques à une fréquence comprise entre 5 gigahertz et 30 gigahertz.

6. Antenne en matière plastique (100) selon l'une des revendications précédentes,
dans laquelle le corps d'antenne (101) comprend une matière plastique renforcée de fibre de verre.

7. Antenne en matière plastique (100) selon l'une des revendications précédentes,
dans laquelle le corps d'antenne (101) comprend du polybutylène téréphtalate et de la fibre de verre.

8. Antenne en matière plastique (100) selon la revendication 6 ou 7,
dans laquelle la teneur en fibre de verre du corps d'antenne (101) est comprise entre 25 % et 35 %.

9. Antenne en matière plastique (100) selon l'une des revendications précédentes,
dans laquelle le revêtement métallique de la face intérieure (102) du corps d'antenne (101) est réalisé sous la forme d'un revêtement de peinture enrichi d'éléments conducteurs.

10. Antenne en matière plastique (100) selon la revendication 9, dans laquelle le revêtement de peinture comprend une peinture conductrice remplie de métal.

11. Antenne en matière plastique (100) selon l'une des revendications précédentes,
dans laquelle le revêtement métallique de la face intérieure (102) du corps d'antenne (101) est réalisé sous la forme d'une couche déposée en phase vapeur sous vide poussé.

12. Antenne en matière plastique (100) selon l'une des revendications précédentes,
dans laquelle le revêtement métallique de la face intérieure (102) du corps d'antenne (101) est réalisé sous la forme d'une couche déposée par galvanisation chimique.

13. Antenne en matière plastique (100) selon l'une des revendications précédentes,
dans laquelle le cloisonnement (107) est réalisé sous la forme d'une lentille de focalisation des ondes électromagnétiques.

14. Antenne en matière plastique (100) selon l'une des revendications précédentes, comprenant en outre :
un col (408) avec une zone de raccordement (409) ;
dans laquelle la zone de raccordement (409) du col (408) présente un premier angle conique (407) par rapport à l'axe longitudinal du col (408) et la zone de raccordement (409) est vissée ou collée de manière étanche à une zone (402) du guide d'ondes (401).

15. Antenne en matière plastique (100) selon la revendication 14,
dans laquelle la zone de raccordement (409) de l'antenne en matière plastique (100) présente une symétrie de rotation par rapport à l'axe longitudinal du col (408).

16. Radar de niveau de remplissage pour déterminer un niveau de remplissage dans un réservoir, le radar de niveau de remplissage comprenant :
une antenne en matière plastique (100) selon l'une des revendications 1 à 15 pour l'émission et/ou la réception d'ondes électromagnétiques (403 ; 404).

17. Radar de niveau de remplissage selon la revendication 16, comprenant en outre :
un guide d'ondes (401) pour alimenter l'antenne (100) avec les ondes électromagnétiques (403 ; 404) ;
- dans lequel le guide d'ondes (401) présente une zone (402) pour raccorder le guide d'ondes (401) à la zone de raccordement (409) de l'antenne en matière plastique (100) ;
- dans lequel la zone (402) du guide d'ondes (401) présente un deuxième angle conique (406) par rapport à l'axe longitudinal du col (408) de l'antenne en matière plastique (100) à l'état raccordé ;
- dans lequel la zone de raccordement (409) de l'antenne en matière plastique (100) présente, par rapport à l'axe longitudinal du col (408) de l'antenne en matière plastique (100), un premier angle conique (407) qui est plus grand que le deuxième angle (406) ; et
- dans lequel la zone de raccordement (409) de l'antenne en matière plastique (100) est vissée ou collée de manière étanche à la zone (402) du guide d'ondes (401).

18. Utilisation d'une antenne en matière plastique (100) selon l'une des revendications 1 à 15 pour la mesure de niveau de remplissage.
